# EUROPEAN PATENT APPLICATION

(11) **EP 4 700 965 A1**
(43) Date of publication of application: **25.02.2026**
(21) Application number: 25774814.5
(22) Date of filing: 19.03.2025
(51) Int. Cl.: H01M 50/502, H01M 50/521, H01M 50/526, H01M 50/503, H01M 50/289, H01M 10/04, H01M 50/211, H01M 50/342

(54) **BATTERY PACK**

(30) Priority: 22.03.2024 KR 20240039910
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/003587
(87) International publication number: WO 2025/198342

(57) **Abstract**

Disclosed herein relates to a battery pack accommodating a cell assembly including a pair of external terminals on one side, including: a pack case; and a plurality of cell assemblies that is seated in the pack case, wherein the pack case includes a busbar connecting the external terminals of each of the cell assemblies, wherein any pair of neighboring cell assemblies disposed relative to a longitudinal direction of the battery pack are disposed such that the positions of the external terminals are reversed relative to a width direction of the battery pack, wherein the pack case further includes a busbar cap formed to correspond to a shape of the busbar and covering an upper part of the busbar.

## Description

### [Technical Field]

The present disclosure relates to a battery pack accommodating a plurality of cell assemblies. More specifically, the battery pack of the present disclosure is characterized in that it has a structure that can effectively protect the busbar electrically connecting each cell assembly from spark particles that may be generated by a short circuit.

This application claims the benefit of Korean Patent Application No. 10-2024-0039910, filed on March 22, 2024, the disclosure of which is incorporated herein by reference.

### [Background]

A battery pack applied to an electric vehicle or the like has a structure in which a plurality of cell assemblies including a plurality of secondary batteries are connected in series or parallel to obtain high power output. And, the secondary battery is capable of repeatedly charging and discharging by electrochemical reactions between components, including electrodes, separators, and electrolytes.

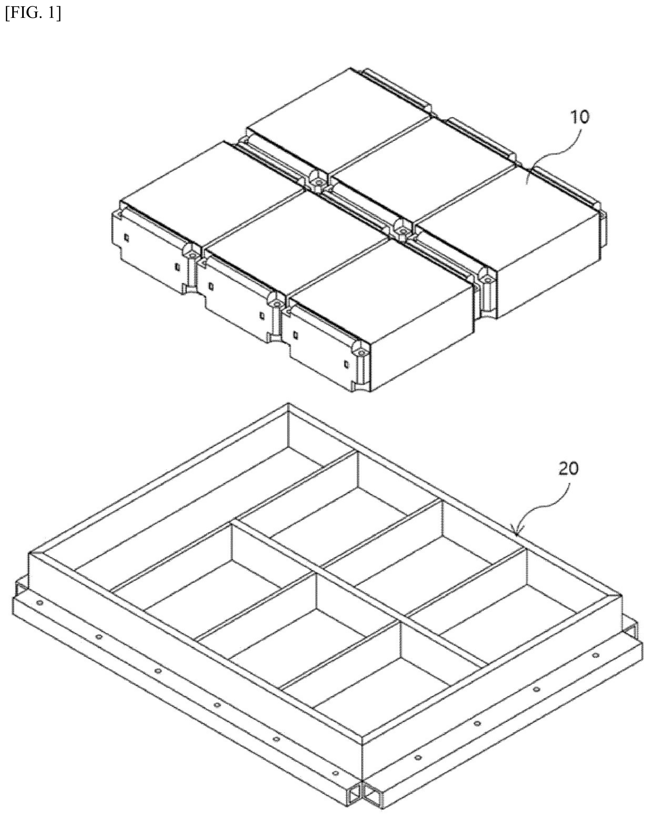

FIG. 1 is a perspective view of a conventional battery pack, wherein the battery pack comprises a plurality of cell assemblies 10 and a pack case 20 for accommodating the cell assemblies 10.

The cell assembly 10 includes a pair of external terminals, wherein each cell assembly 10 is electrically connected via a separate busbar connecting the external terminals.

Meanwhile, in the event of a short circuit within any one of the cell assemblies 10 accommodated in the pack case 20, a spark accompanied by high heat may be generated. At this time, if the ejection of the spark or the like scatters and touches the busbar, it can short-circuit a large number of cell assemblies 10 in an instant, which can lead to a large explosion or fire.

In particular, since the cell assembly 10 accommodated in most battery packs is disposed so that the external terminals face the center of the pack case 20, it is highly likely that the busbars will be touched by the scattered spark particles. In other words, since the conventional battery pack has a structure in which the busbars are gathered in the center, it is vulnerable to a large fire in the event of a spark or flame caused by a short circuit.

(Prior art reference) Korean Public Patent No. 10-2022-0001228

### [Summary]

### [Technical Problem]

Therefore, the present disclosure was created to solve the above problems, and aims to provide a battery pack with a structure that can exclude a situation where busbars are densely packed in a certain area.

Furthermore, it is an object of the present disclosure to provide a battery pack of such a configuration that it is possible to exclude a situation in which scattered spark discharges come into contact with the busbars.

Other objects and advantages of the present disclosure will be understood from the following description, which will become apparent from the embodiments of the present disclosure. It will also be readily apparent that the objects and advantages of the present disclosure may be realized by the means and combinations thereof set forth in the claims of the patent.

### [Technical Solution]

According to the present disclosure, there is provided a battery pack accommodating a cell assembly including a pair of external terminals on one side.

The battery pack includes: a pack case; and a plurality of cell assemblies that is seated in the pack case, wherein the pack case comprises a busbar connecting the external terminals of each of the cell assemblies, wherein any pair of neighboring cell assemblies disposed relative to a longitudinal direction of the battery pack are disposed such that the positions of the external terminals are reversed relative to a width direction of the battery pack, wherein the pack case further includes a busbar cap formed to correspond to a shape of the busbar and covering an upper part of the busbar.

The busbar cap may include a material having at least one of the properties among heat resistance and fire resistance.

The pack case further includes a sheathing member positioned between the busbar and the busbar cap and covering an upper part of the busbar, wherein the sheathing member may include a material having insulating properties.

The busbar may include a connecting busbar bent to connect a pair of cell assemblies having opposite positions of external terminals.

The busbar cap may be formed to bend in response to the shape of the connecting busbar.

The connecting busbar includes a first connecting part spanning between the pair of cell assemblies, a second connecting part bent in the width direction of the cell assemblies at one end of the first connecting part, and a third connecting part bent in the width direction of the cell assemblies at the other end of the first connecting part, wherein the second connecting part may be connected with an external terminal of a cell assembly of one of the pair of cell assemblies, and the third connecting part may be connected with an external terminal of a cell assembly of the other of the pair of cell assemblies.

The busbar cap may include a first cover part covering the first connecting part of the connecting busbars, a second cover part covering the second connecting part, and a third cover part covering the third connecting part.

The second connecting part and the third connecting part may be bent in opposite directions at both ends of the first connecting part.

The pack case further includes a cross beam interposed between a pair of cell assemblies disposed neighboring each other relative to the longitudinal direction of the battery pack and separating each cell assembly, wherein the connecting busbar may be located on an upper part of the cross beam.

The busbar cap may be coupled to the upper end of the cross beam such that the connecting busbar located on the cross beam is not exposed to the outside.

The cross beam includes an insertion groove formed in response to a shape of the connecting busbar for insertion of the connecting busbar, wherein the connecting busbar may be inserted into and fixed to the insertion groove of the cross beam.

The cell assembly includes: a cell stack having a plurality of cells stacked from which electrode leads are derived; and an end plate coupled to a front and a rear surface of the cell stack, respectively, wherein the external terminal is formed on the end plate that is coupled at a position corresponding to the electrode lead and may be in electrical communication with the electrode lead.

The cell assembly may further include a module frame that wraps around a perimeter of the cell stack and coupled to the end plate.

The module frame may include: a lower frame supporting a lower part of the cell stack; an upper frame supporting an upper part of the cell stack; and a pair of side frames supporting both sides of the cell stack, wherein the upper frame may include a plurality of opening holes.

The cell assembly further includes a pair of support frames supporting the cell stack on either side of the cell stack, wherein each support frame in a position facing each other in the neighboring cell assembly is coupled to form a separation beam, wherein the connecting busbar may be positioned on the upper part of the separation beam.

The busbar cap may be coupled to the upper end of the separation beam such that the connecting busbar located on the separation beam is not exposed to the outside.

### [Advantageous Effects]

According to the present disclosure, by applying a busbar with a modified shape, a battery pack can be provided which improves safety by reducing the probability of spark discharge generated in a thermal runaway situation of the cell assembly contacting the busbar.

Furthermore, according to the present disclosure, a busbar cap configuration covering the upper part of the busbar can be utilized to prevent the busbar from directly contacting the spark discharge.

### [Brief Description of the Drawings]

FIG. 1 is a perspective view of a conventional battery pack.
FIG. 2 is a perspective view of a battery pack according to a first embodiment of the present disclosure.
FIG. 3 is a perspective view of a cell assembly included in the battery pack of FIG. 2.
FIG. 4 is a top view of a battery pack according to a first embodiment of the present disclosure.
FIG. 5 is a perspective view of a pair of cell assemblies and connecting busbars included in the battery pack of FIG. 2.
FIG. 6 is a perspective view of the pair of cell assemblies and connecting busbars coupled.
FIG. 7 is a perspective view of the cell assembly of FIG. 6, connecting busbar, and busbar cap.
FIG. 8 is a perspective view illustrating a variation of the cross beam included in the pack case.
FIG. 9 is a perspective view of a connecting busbar, a sheathing member, and a busbar cap.
FIG. 10 is a perspective view of a battery pack according to a second embodiment of the present disclosure.
FIG. 11 is a top view of a battery pack according to a second embodiment of the present disclosure.
FIG. 12 is a perspective view of a pair of cell assemblies and connecting busbars included in the battery pack of FIG. 10.
FIG. 13 is a perspective view of the cell assemblies of FIG. 12 coupled.
FIG. 14 is a perspective view of the cell assembly of FIG. 13 coupled to the connecting busbar.
FIG. 15 is a perspective view illustrating a variant of the cell assembly included in a battery pack according to a second embodiment of the present disclosure.
FIG. 16 is a top view of the cell assembly of FIG. 15.
FIG. 17 is a top view of the cell assembly of FIG. 16 paired together.
FIG. 18 is a perspective view of a pair of support frames and connecting busbars included in a battery pack according to a second embodiment of the present disclosure.
FIG. 19 is a perspective view of the support frames of FIG. 18 coupled.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery pack accommodating a plurality of cell assemblies. More specifically, the battery pack of the present disclosure is characterized in that it has a structure that effectively protects the busbars electrically connecting each cell assembly from spark discharge that may result from a short circuit.

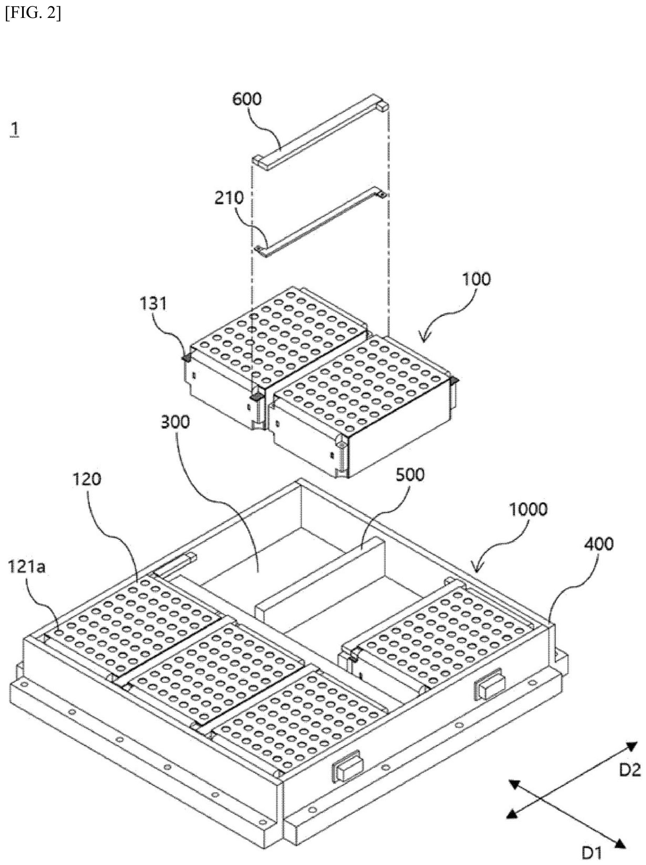

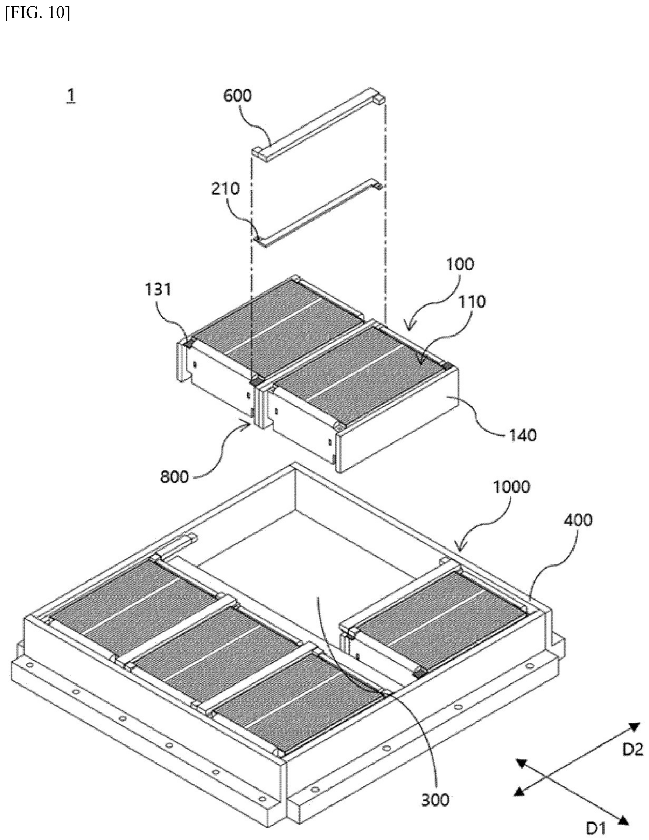

FIGS. 2 through 9 relate to a battery pack according to a first embodiment of the present disclosure, and FIGS. 10 through 19 relate to a battery pack according to a second embodiment of the present disclosure.

Hereinafter, specific embodiments of the battery pack of the present disclosure will be described in detail with reference to the accompanying drawings. For reference, the orientations of front-to-back, up-down, left-right, and right-left to designate relative positions used in the following description are intended to aid in the understanding of the invention and refer to the orientations shown in the drawings unless otherwise defined.

Here, the width direction of the cell assembly is defined as referring to the direction in which the cells are stacked, and the longitudinal direction of the cell assembly is defined as referring to the direction orthogonal to the width direction of the cell assembly, i.e., the direction connecting the two sides where the end plates are coupled.

Further, the width direction (D2) of the battery pack refers to a longitudinal direction of the cell assembly accommodated in the battery pack, and the longitudinal direction (D1) of the battery pack refers to a width direction of the cell assembly accommodated in the battery pack.

### (First embodiment)

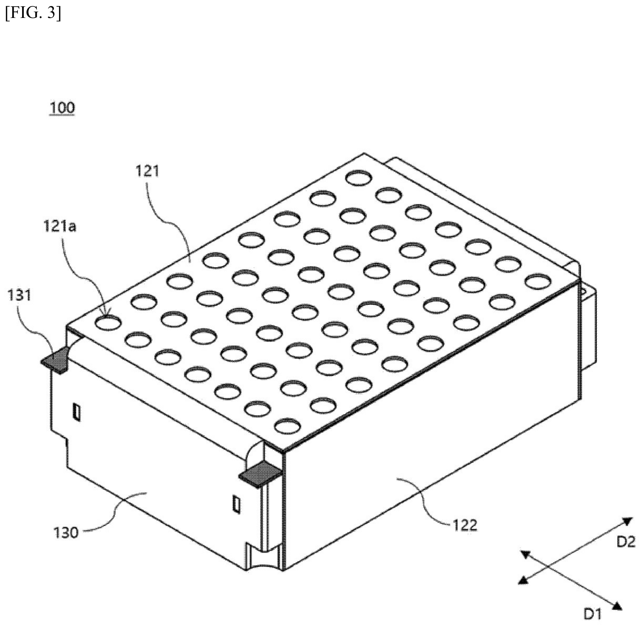

FIG. 2 is a perspective view of a battery pack 1 according to a first embodiment of the present disclosure, and FIG. 3 is a perspective view of a cell assembly 100 included in the battery pack 1 of FIG. 2.

The battery pack 1 of the present disclosure includes a pack case 1000 and a plurality of cell assemblies 100 that are seated in the pack case 1000.

Referring to FIG. 2, the pack case 1000 accommodates a plurality of cell assemblies 100 including a pair of external terminals 131 on one side.

The cell assembly 100 includes a cell stack 110, which is a plurality of cells (not shown) stacked in one direction with electrode leads derived therefrom.

Each of the cells includes an electrode assembly stacked with alternating electrodes and separators, an electrode lead in connection with the electrode, a case enclosing the electrode assembly with the electrode lead extending outwardly, and an electrolyte filled with the electrode assembly within the case.

The electrode may be a positive electrode with a slurry of positive electrode active material, binder resin, conductive material, and other additives applied to at least one side of the current collector, or a negative electrode with a slurry of negative electrode active material, binder resin, conductive material, and other additives applied to at least one side of the current collector. Thus, the electrode assembly comprises alternately stacked positive electrodes, separators, and negative electrodes.

The positive electrode active material may include a lithium-containing transition metal oxide, and the negative electrode active material may include a lithium metal, a carbon material, and a metal compound, or a mixture thereof, from which lithium ions may be adsorbed and released.

The separator may employ a conventional porous polymeric film used in lithium secondary batteries.

The case is a sheet material processed into a predetermined shape. In this case, the sheet material is a multilayer structure including an outermost outer resin layer made of an insulating material such as polyethylene terephthalate (PET) or nylon, a metal layer made of aluminum to maintain mechanical strength and prevent moisture and oxygen from penetrating, and an inner resin layer made of a polyolefin-based material that is thermally adhesive and acts as a sealing material.

The sheet material comprising the case may have a predetermined adhesive resin layer interposed between the inner resin layer and the metal layer and between the outer resin layer and the metal layer as required. The adhesive resin layer is for smooth attachment between dissimilar materials and may be formed in a single layer or in multiple layers, and the material is typically a polyolefin-based resin, or a polyurethane resin may be used for smooth processing, and mixtures thereof may also be employed.

Depending on the shape of the electrode assembly and case, the cells may be categorized as prismatic, pouch-type and cylindrical. However, in the detailed description and drawings of the present disclosure, a pouch-type cell will be described by way of example for ease of understanding.

The front and rear surfaces of the cell stack 110 may be coupled with end plates 130 configured to protect and support the cell stack 110.

The cell assembly 100 further includes external terminals 131 electrically connected to electrode leads drawn onto the cell stack 110.

The external terminal 131 is formed on the end plate 130, at least one end of which is formed to be exposed outside the end plate 130.

Specifically, the external terminals 131 are formed on the end plates 130 coupling at positions corresponding to electrode leads of the cell stack 110, among the pair of end plates 130 located at the front and rear surfaces of the cell assembly 100.

Referring to FIG. 3, an external terminal 131 is formed on the end plate 130 located at the front surface of the cell assembly 100.

The cell assembly 100, included in the battery pack 1 according to the first embodiment of the invention, further includes a module frame 120, which wraps around the perimeter of the cell stack 110, as shown in FIGS. 2 and 3, and couples with the end plate 130.

The module frame 120 includes a lower frame (not shown) supporting a lower part of the cell stack 110, an upper frame 121 supporting an upper part of the cell stack 110, and a pair of side frames 122 supporting either side of the cell stack 110.

The upper frame 121 of the present disclosure includes an opening hole 121a, as shown in FIGS. 2 and 3, which is open to allow gases, flames and spark particles, etc. to be quickly discharged in the event of a thermal runaway phenomenon occurring inside the cell assembly 100 due to a short circuit or the like. Thus, in the event of thermal runaway of the cell stack 110 enclosed by the module frame 120, gases and spark particles and the like can be discharged to the upper part through the opening hole 121a.

The battery pack 1 of the present disclosure may further include an upper case (not shown) that is coupled to the pack case 1000 to cover an upper part of the cell assembly 100 accommodated in the pack case 1000. However, the upper case is outside the scope of the present disclosure and will not be described in detail.

The pack case 1000 of the present disclosure includes a plate-shaped base plate 300 supporting a lower part of the cell assembly 100 and side beams 400 coupled to the base plate 300 along edges of the base plate 300 to support side parts of the cell assembly 100 seated on the base plate 300.

Additionally, the battery pack 1 of the present disclosure according to a first embodiment further includes a cross beam 500 interposed between a pair of neighboring cell assemblies 100 and separating each cell assembly 100 with respect to a longitudinal direction (D1) of the battery pack 1, as shown in FIG. 2.

The cross beam 500 may serve to separate the sides of each cell assembly 100 from touching, or it may serve to support the sides of each cell assembly 100.

The pack case 1000 of the present disclosure includes a busbar connecting the external terminals 131 of each cell assembly 100 as shown in FIG. 2, and further includes a busbar cap 600 formed to correspond to the shape of the busbar and covering the top of the busbar.

The cell assemblies 100 that are seated in the pack case 1000 are disposed such that the positions of any pair of neighboring external terminals 131 are opposite each other with respect to the longitudinal direction D1 of the battery pack 1 as shown in FIG. 2. That is, any pair of neighboring cell assemblies 100 are disposed such that the positions of the external terminals 131 are reversed with respect to the width direction D2 of the battery pack 1.

Accordingly, a busbar electrically connecting the two neighboring cell assemblies 100 is also formed corresponding to the arrangement shape of the cell assemblies 100.

Specifically, the busbar includes a connecting busbar 210 that is bent and shaped to connect a pair of cell assemblies 100 having opposite positions of their external terminals 131.

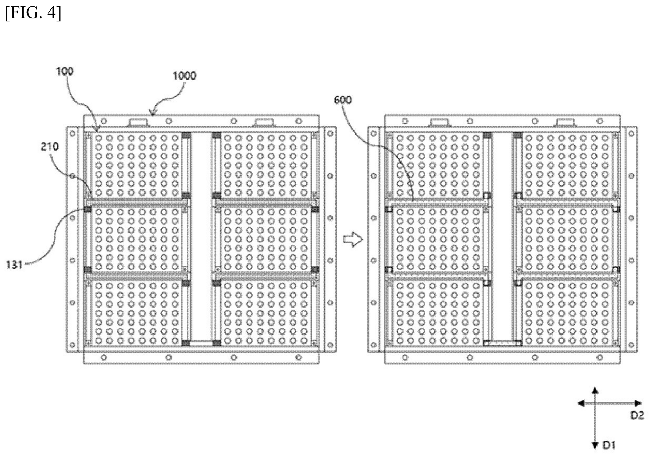

FIG. 4 is a top view of a battery pack 1 according to a first embodiment of the present disclosure.

Referring to FIG. 4, the plurality of cell assemblies 100 disposed side by side along a longitudinal direction D1 of the battery pack 1 have their external terminals 131 facing in opposite directions with respect to a width direction D2 of the battery pack 1. In this case, the connecting busbar 210 connects between a pair of side-by-side cell assemblies 100 along the longitudinal direction D1 of the battery pack 1 as shown in FIG. 4.

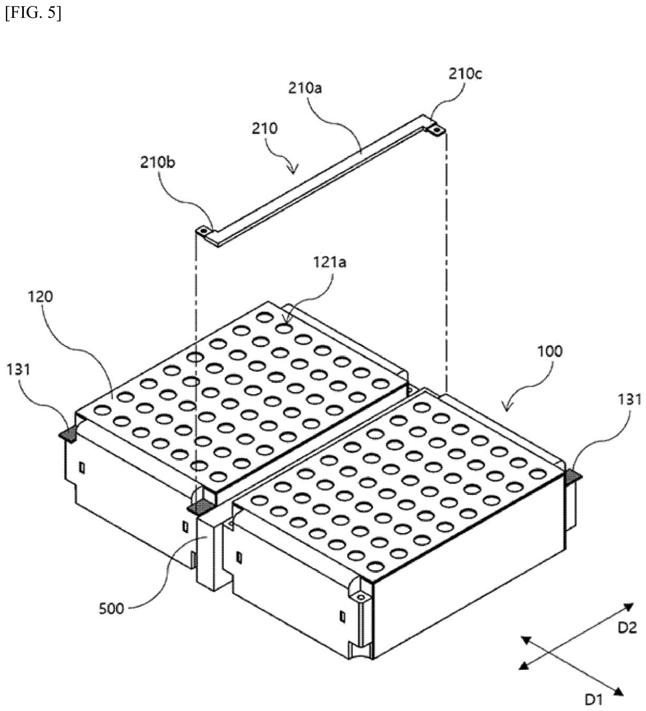

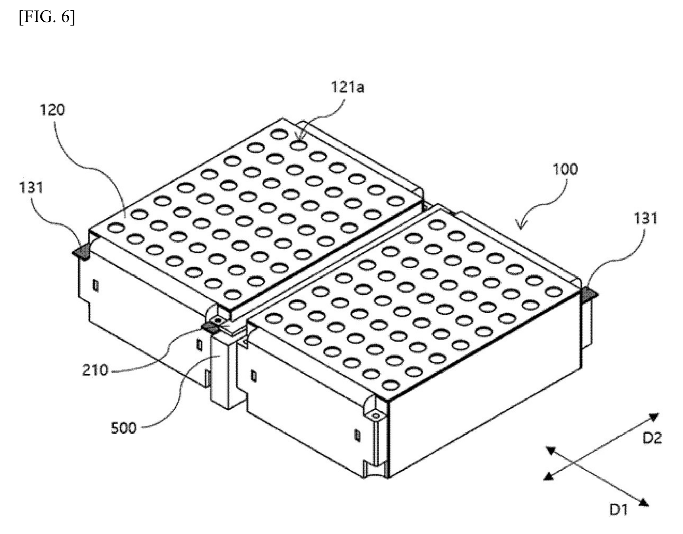

FIG. 5 is a perspective view of the pair of cell assemblies 100 and the connecting busbar 210 included in the battery pack 1 of FIG. 2, and FIG. 6 is a perspective view of the pair of cell assemblies 100 and the connecting busbar 210 coupled.

The connecting busbar 210 includes a first connecting part 210a spanning between the pair of cell assemblies 100 as shown in FIGS. 5 and 6, a second connecting part 210b bent in the width direction D2 of the cell assemblies 100 at one end of the first connecting part 210a, and a third connecting part 210c bent in the width direction D2 of the cell assemblies 100 at the other end of the first connecting part 210a.

The second connecting part 210b and third connecting part 210c are bent in opposite directions from each other at both ends of the first connecting part 210a.

The second connecting part 210b is connected with an external terminal 131 of a cell assembly 100 of one of the pair of cell assemblies 100, and the third connecting part 210c is connected with an external terminal 131 of a cell assembly 100 of the other of the pair of cell assemblies 100.

The connecting busbar 210 is located on the upper part of a cross beam 500 located between the cell assemblies 100 as shown.

According to some embodiments, the lower part of the first connecting part 210a of the connecting busbar 210 may be supported by the cross beam 500.

According to some embodiments, the connecting busbar 210 may be coupled to and fixed to the cross beam 500.

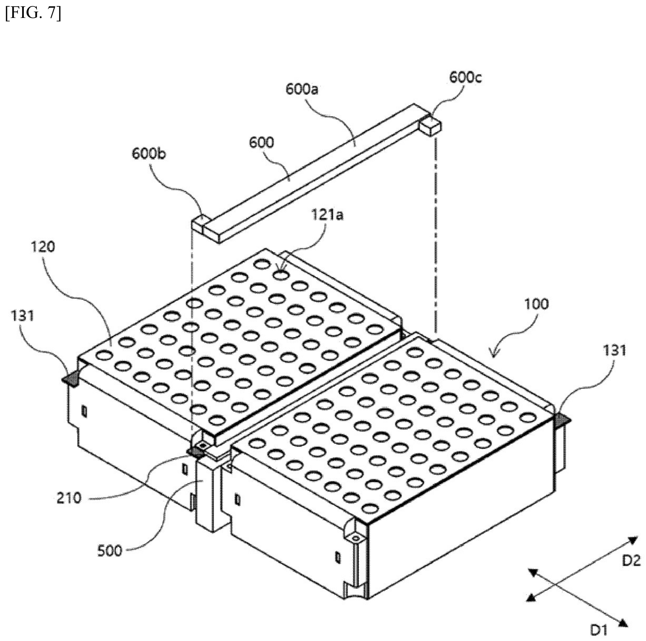

FIG. 7 is a perspective view of the cell assembly 100 of FIG. 6 and the connecting busbar 210 and busbar cap 600.

The busbar cap 600 covers and protects the upper part of the busbar.

The busbar cap 600 covers the busbar to protect the busbar from spark particles, flames, and hot gases approaching from the outside. Accordingly, the busbar cap 600 includes a material having at least one of the properties of heat resistance and fire resistance. For example, the busbar cap 600 may include Mica.

The busbar cap 600 may further include a material having insulating properties. For example, the busbar cap 600 may further include fiberglass.

The busbar cap 600, which is correspondingly coupled to the connecting busbar 210, is formed to bend in response to the shape of the connecting busbar 210 as shown in FIGS. 2, 4, and 7.

Specifically, the busbar cap 600 includes a first cover part 600a covering a first connecting part 210a of the connecting busbar 210, a second cover part 600b covering a second connecting part 210b, and a third cover part 600c covering a third connecting part 210c of the connecting busbar 210.

A first cover part 600a of the busbar cap 600 spans between the cell assemblies 100, a second cover part 600b is bent in the width direction D2 of the cell assemblies 100 at one end of the first cover part 600a, and a third cover part 600c is bent in the width direction D2 of the cell assemblies 100 at the other end of the first cover part 600a.

According to some embodiments, the busbar cap 600 may be directly coupled to the connecting busbar 210, or may be coupled and fixed to the cross beam 500. That is, the busbar cap 600 may be coupled to the upper end of the cross beam 500 such that the connecting busbar 210 located on the cross beam 500 is not exposed to the outside.

In some embodiments, the cross beam 500 may further include an insertion groove 510 into which the connecting busbar 210 is inserted.

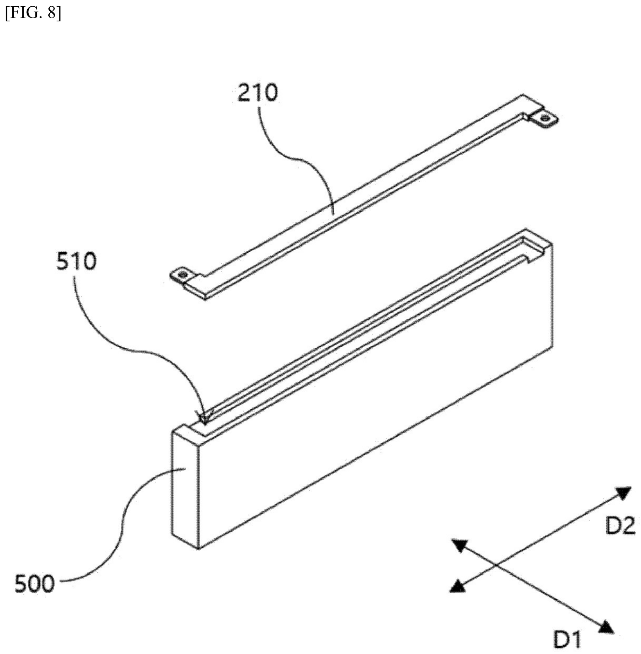

FIG. 8 is a perspective view illustrating a variant of the cross beam 500 included in the pack case 1000.

As shown in FIG. 8, the insertion groove 510 at the upper end of the cross beam 500 is formed in correspondence with the shape of the connecting busbar 210 such that the connecting busbar 210 is inserted therein. Thus, the connecting busbar 210 can be inserted into the insertion groove 510 of the cross beam 500 and fixed therein.

The busbar cap 600 is coupled to the upper end of the cross beam 500 so as to cover the upper part of the connecting busbar 210 inserted in the insertion groove 510.

In some embodiments, the pack case 1000 may further include a sheathing member 700 positioned between the busbar and the busbar cap 600 to cover the upper part of the busbar.

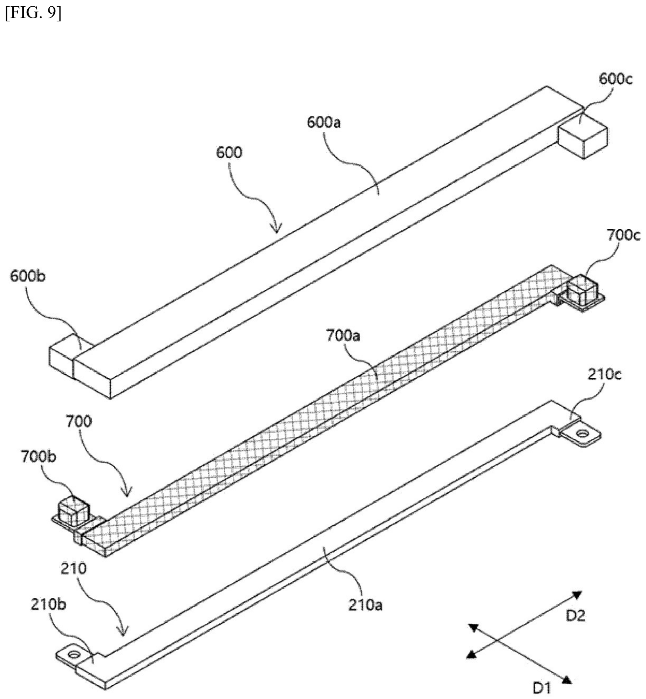

FIG. 9 is a perspective view of the connecting busbar 210, the sheathing member 700, and the busbar cap 600.

The sheathing member 700 includes a material having insulating properties, which serves to prevent short circuits and static electricity from occurring on a portion of the connecting busbar 210.

The sheathing member 700 is formed to correspond to the shape of the connecting busbar 210, since it is necessary to cover and insulate the entire upper part of the connecting busbar 210. Specifically, the sheathing member 700 includes a first sheathing part 700a covering a first connecting part 210a of the connecting busbar 210, a second sheathing part 700b covering a second connecting part 210b, and a third sheathing part 700c covering a third connecting part 210c of the connecting busbar 210, as shown in FIG. 9.

The busbar cap 600 preferably covers the entirety of the sheathing members 700 covering the connecting busbars 210.

The battery pack 1 according to the first embodiment of the present disclosure, by modifying the structure of the connecting busbar 210, and by configuring the busbar cap 600 covering the upper part of the connecting busbar 210, it is possible to minimize the impact on the other cell assemblies 100 even if one of the cell assemblies 100 explodes or sparks or the like due to an internal short circuit or the like, and spark particles or the like are generated.

### (Second embodiment)

The busbar cap 600 of the present disclosure can also be applied to a battery pack 1 accommodating a cell assembly 100 without the module frame 120 applied.

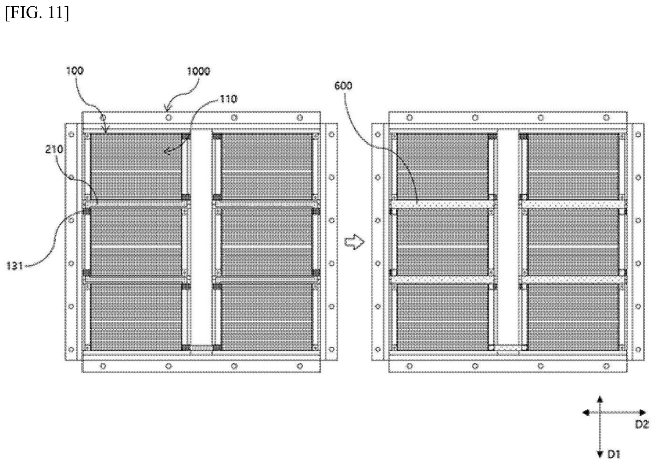

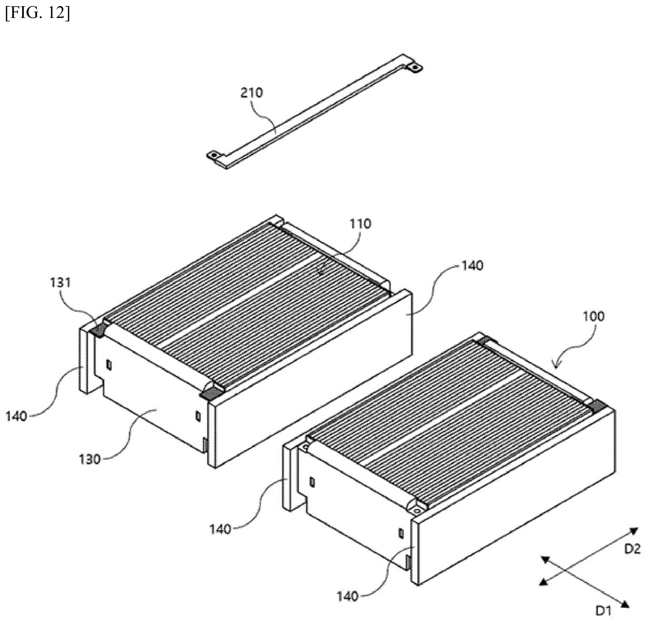

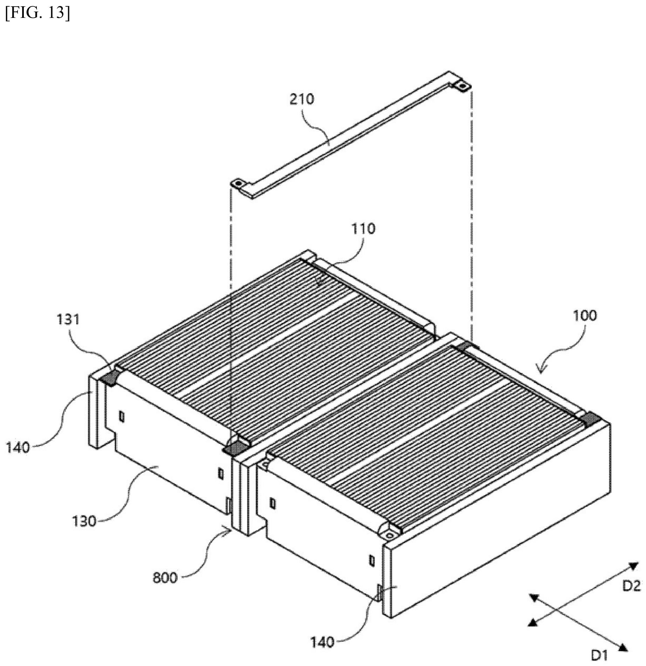

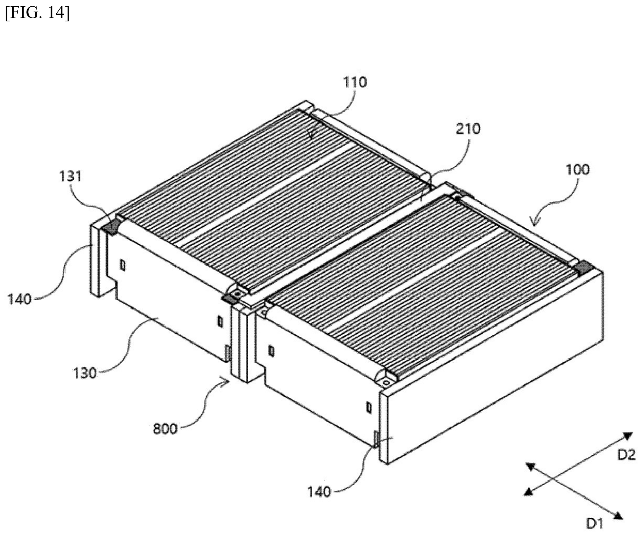

FIG. 10 is a perspective view of a battery pack 1 according to a second embodiment of the present disclosure, FIG. 11 is a top view of a battery pack 1 according to a second embodiment of the present disclosure, FIG. 12 is a perspective view of a pair of cell assemblies 100 and connecting busbars 210 included in the battery pack 1 of FIG. 10, FIG. 13 is a perspective view of the cell assemblies 100 of FIG. 12 coupled, and FIG. 14 is a perspective view of the cell assemblies 100 of FIG. 13 coupled with connecting busbars 210.

The cell assembly 100 included in the battery pack 1 according to a second embodiment further includes a pair of support frames 140 supporting the cell stack 110 on both sides of the cell stack 110, as shown in FIGS. 10 to 14.

Each of the support frames 140 may be coupled and fixed with end plates 130 located at the front and rear surfaces of the cell assembly 100.

Each of the support frames 140 in a position facing each other in the neighboring cell assemblies 100 may be coupled to form a single separation beam 800, as shown in FIGS. 12 and 13.

The separation beam 800 may fulfill the same role as the cross beam 500 of the battery pack 1 according to a first embodiment of the present disclosure.

The connecting busbar 210 is positioned on the upper part of the separation beam 800, as shown in FIGS. 10, 11 and 14.

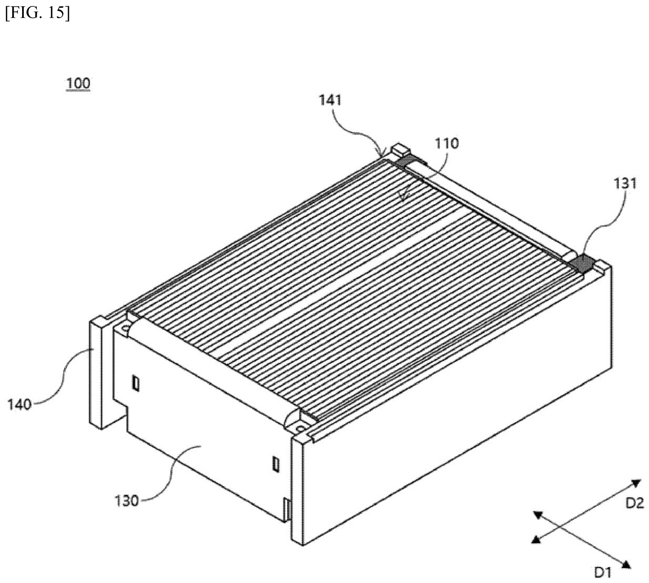

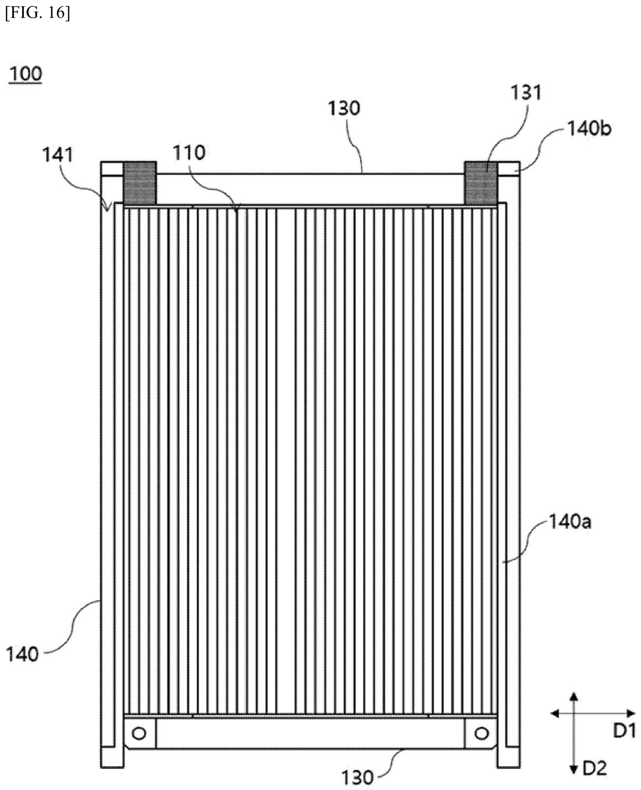

FIG. 15 is a perspective view illustrating a variant of the cell assembly 100 included in the battery pack 1 according to a second embodiment of the present disclosure, and FIG. 16 is a plan view of the cell assembly 100 of FIG. 15.

The cell assembly 100 is free from the configuration of a module frame 120 enclosing the cell stack 110, so that the cell stack 110 inside is still exposed to the outside as shown in FIGS. 10 to 15.

Support frames 140 located on either side of the cell stack 110 may support the sides of the cell stack 110 to protect the cell stack 110 from impacts from the side parts.

The busbar cap 600 is coupled to the upper end of the separation beam 800 so that the connecting busbars 210 located on the separation beam 800 are not exposed to the outside.

According to some embodiments, the upper end of the support frame 140 includes a second guide part 140b protruding from an end at which the external terminal 131 is located relative to the longitudinal direction D1 of the cell assembly 100, and a first guide part 140a protruding from an end corresponding to an opposite side of the second guide part 140b.

In other words, the first guide part 140a and the second guide part 140b are each protruding upwardly at both ends of the support frame 140.

The second guide part 140b is straight extending along the width direction D2 of the cell assembly 100.

The first guide part 140a extends along the width direction D2 of the cell assembly 100 and is bent at a right angle at an end adjacent to the cell stack 110.

A pair of support frames 140 included in the cell assembly 100 include auxiliary grooves formed by protrusions of the first guide part 140a and second guide part 140b on their upper parts.

The auxiliary groove has an open shape on both a side facing the external terminal 131 and a side facing the first guide part 140a.

The auxiliary grooves formed in the pair of support frames 140 have a shape that is symmetrical to each other.

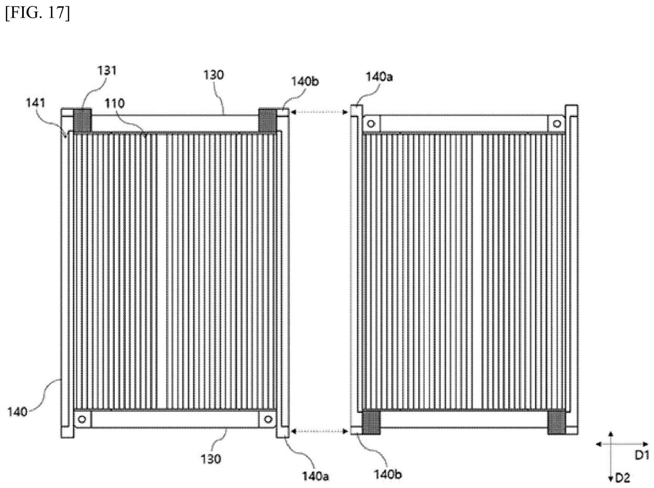

FIG. 17 is a plan view of the paired cell assembly 100 of FIG. 16.

A pair of neighboring cell assemblies 100 that are seated in the pack case 1000 of the present disclosure are disposed in the same form as in FIG. 17, wherein the second guide part 140b included in the support frame 140 of one cell assembly 100 is coupled to the first guide part 140a of the support frame 140 of the other neighboring cell assembly 100.

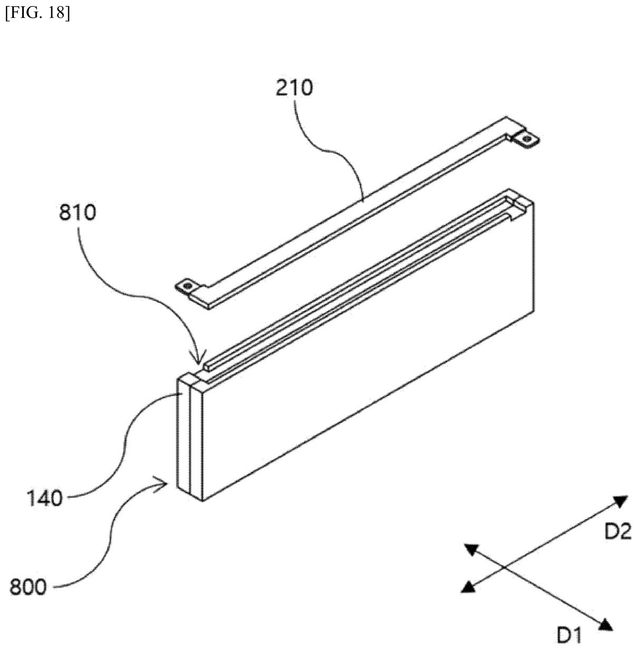

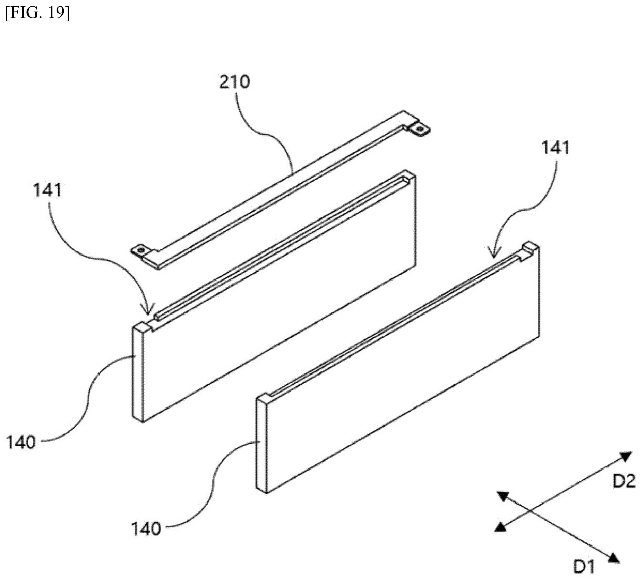

FIG. 18 is a perspective view of a pair of support frames 140 and a connecting busbar 210 included in a battery pack 1 according to a second embodiment of the present disclosure, and FIG. 19 is a coupled perspective view of the support frames 140 of FIG. 18.

The auxiliary grooves 141 of each of the support frames 140 form a single coupling groove 810 when the pair of support frames 140 are coupled as shown in FIGS. 18 and 19.

The coupling groove 810 may fulfill the same role as the insertion groove 510 included in the cross beam 500 of the battery pack 1 according to a first embodiment of the present disclosure.

The coupling groove 810 at the upper end of the separation beam 800 corresponds to the shape of the connecting busbar 210 such that the connecting busbar 210 is inserted therein. Thus, the connecting busbar 210 can be inserted into the coupling groove 810 of the separation beam 800 and fixed therein.

The busbar cap 600 is coupled to the upper end of the separating beam 800 so as to cover the upper part of the connecting busbar 210 inserted in the coupling groove 810.

The battery pack 1 according to the second embodiment of the present disclosure, by modifying the structure of the connecting busbar 210, and by configuring the busbar cap 600 to cover the upper part of the connecting busbar 210, it is possible to minimize the impact on the other cell assemblies 100 even if one of the cell assemblies 100 explodes or sparks or the like due to an internal short circuit or the like, and spark particles or the like are generated.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### [Description of Reference Numerals]

10: (PRIOR ART) CELL ASSEMBLY
20: (PRIOR ART) PACK CASE
1: BATTERY PACK
1000: PACK CASE
100: CELL ASSEMBLY
110: CELL STACK
120: MODULE FRAME
121: UPPER FRAME
121a: OPENING HOLE
122: SIDE FRAME
130: END PLATE
131: EXTERNAL TERMINAL
140: SUPPORT FRAME
140a: FIRST GUIDE PART
140b: SECOND GUIDE PART
141: AUXILIARY GROOVE
210: CONNECTING BUSBAR
210a: FIRST CONNECTING PART
210b: SEOCOND CONNECTING PART
210c: THIRD CONNECTING PART 300: Base Plate
400: SIDE BEAM
500: CROSS BEAM
510: INSERTION GROOVE
600: BUSBAR CAP
600a: FIRST COVER PART
600b: SECOND COVER PART
600c: THIRD COVER PART
700: SHEATHING MEMBER
700a: FIRST SHEATHING PART
700b: SECOND SHEATHING PART
700c: THIRD SHEATHING PART
800: SEPARATION BEAM
810: COUPLING GROOVE
D1: BATTERY PACK LONGITUDINAL DIRECTION
D2: BATTERY PACK WIDTH DIRECTION

## Claims

1. A battery pack accommodating a cell assembly comprising a pair of external terminals on one side, comprising:
a pack case; and
a plurality of cell assemblies that is seated in the pack case, wherein
the pack case comprises a busbar connecting the external terminals of each of the cell assemblies, wherein
any pair of cell assemblies disposed neighboring each other on a basis of a longitudinal direction of the battery pack are disposed such that the positions of the external terminals are reversed on a basis of a width direction of the battery pack, wherein
the pack case further comprises a busbar cap formed to correspond to a shape of the busbar and covering an upper part of the busbar.

2. The battery pack of claim 1, wherein
the busbar cap comprises a material having at least one of the properties among heat resistance and fire resistance.

3. The battery pack of claim 1, wherein
the pack case further comprises a sheathing member positioned between the busbar and the busbar cap and covering the upper part of the busbar, wherein
the sheathing member comprises a material having insulating properties.

4. The battery pack of claim 1, wherein
the busbar comprises a connecting busbar bent to connect a pair of cell assemblies having positions opposite to each other of external terminals.

5. The battery pack of claim 4, wherein
the busbar cap is formed to bend corresponding to the shape of the connecting busbar.

6. The battery pack of claim 4, wherein,
the connecting busbar includes a first connecting part spanning between the pair of cell assemblies, a second connecting part bent in the width direction of the cell assemblies at one end of the first connecting part, and a third connecting part bent in the width direction of the cell assemblies at the other end of the first connecting part, wherein
the second connecting part is connected with an external terminal of any cell assembly of one of the pair of cell assemblies, and the third connecting part is connected with an external terminal of a cell assembly of the other of the pair of cell assemblies.

7. The battery pack of claim 6, wherein
the busbar cap comprises a first cover part covering the first connecting part of the connecting busbars, a second cover part covering the second connecting part, and a third cover part covering the third connecting part.

8. The battery pack of claim 6, wherein
the second connecting part and the third connecting part are bent in directions opposite to each other at both ends of the first connecting part.

9. The battery pack of claim 4, wherein
the pack case further comprises a cross beam interposed between any pair of cell assemblies disposed neighboring each other on a basis of the longitudinal direction of the battery pack and separating each cell assembly, wherein
the connecting busbar is located on an upper part of the cross beam.

10. The battery pack of claim 9, wherein
the busbar cap is coupled to the upper end of the cross beam such that the connecting busbar located on the cross beam is not exposed to the outside.

11. The battery pack of claim 9, wherein
the cross beam comprises an insertion groove formed in response to a shape of the connecting busbar for insertion of the connecting busbar, wherein
the connecting busbar is inserted into and fixed to the insertion groove of the cross beam.

12. The battery pack of claim 4, wherein
the cell assembly comprises:
a cell stack in which a plurality of cells from which electrode leads are derived are stacked; and
an end plate coupled to a front and a rear surface of the cell stack, respectively, wherein
the external terminal is formed on the end plate that is coupled at a position corresponding to the electrode lead and is in electrical communication with the electrode lead.

13. The battery pack of claim 12, wherein
the cell assembly further comprises a module frame that wraps around a perimeter of the cell stack and coupled to the end plate.

14. The battery pack of claim 13, wherein
the module frame comprises:
a lower frame supporting a lower part of the cell stack;
an upper frame supporting an upper part of the cell stack; and
a pair of side frames supporting both sides of the cell stack, wherein
the upper frame comprises a plurality of opening holes.

15. The battery pack of claim 12, wherein
the cell assembly further comprises a pair of support frames supporting the cell stack on both sides of the cell stack, wherein
each support frame of the pair of support frames in a position facing each other in the cell assembly disposed neighboring each other is coupled to form a separation beam, wherein
the connecting busbar is positioned on the upper part of the separation beam.

16. The battery pack of claim 15, wherein
the busbar cap is coupled to the upper end of the separation beam such that the connecting busbar located on the separation beam is not exposed to the outside.
